Europäisches Patentamt

European Patent Office

Office européen des brevets

(11) Publication number: **0 303 447 B1**

# EUROPEAN PATENT SPECIFICATION

(45) Date of publication of patent specification: **16.06.93**  (51) Int. Cl.⁵: **C09C 1/48**, C01B 31/08, C08J 11/00, B29B 17/00

(21) Application number: **88307357.9**

(22) Date of filing: **09.08.88**

(54) **Method for reclaiming carbonaceous material from a waste material.**

(30) Priority: **14.08.87 US 85880**

(43) Date of publication of application:
**15.02.89 Bulletin 89/07**

(45) Publication of the grant of the patent:
**16.06.93 Bulletin 93/24**

(84) Designated Contracting States:
**DE ES FR GB IT NL**

(56) References cited:
**WO-A-79/00625**
**US-A- 4 647 443**

**PATENT ABSTRACTS OF JAPAN vol. 5, no. 180 (C-79)(852) 19 November 1981; & JP-A-56 104971**

(73) Proprietor: **AMERICAN TIRE RECLAMATION INC**
**315 East Eisenhower Parkway Suite 300**
**Ann Arbor Michigan 48108(US)**

(72) Inventor: **Fader, John Henry**
**2142 Pauline Boulevard, No. 301**
**Ann Arbor Michigan 48103(US)**

(74) Representative: **Williams, Trevor John et al**
**J.A. KEMP & CO. 14 South Square Gray's Inn**
**London WC1R 5EU (GB)**

**Description**

Technical Field

The present invention relates to methods for reclaiming useful materials from discarded waste materials. More particularly, the present invention relates to reclaiming of carbon black from scrap or discarded rubber materials.

Background

In recent years with the increase in oil prices and the increasing awareness of growing waste problems, there has been an increasing interest in the reclamation of usable waste materials from waste products. In recent years the process of pyrolysis has been used in reclaiming various materials from waste by providing a rapid decomposition and recovery of organic matter contained in the waste. Using this process on carbonaceous material such as plastic, wood, paper, cardboard, scrap rubber, coal, coke, coal tars, oils, live stock manure, and other garbage and solid waste will allow the reclamation of usable organic materials.

A major waste problem in the world today is the disposal of automobile and other vehicle tires. It is estimated that nationally two hundred million automobile tires and forty million truck tires are discarded annually in the United States alone. It is estimated that less than twenty percent of the tires removed from vehicles today are recovered for recapping for resale and only ten percent are reclaimed for other uses. The remaining seventy percent of the waste tires are a disposal problem.

In the past, tires have been burned or dumped in land fills in order to dispose of them. The burning of tires has long been disfavored due to the substantial amounts of noxious gases given off while burning. Tires are also undesirable for disposal in landfills since they do not readily deteriorate. In addition, scrap tires in landfills form an unhealthy breeding ground for insects, rats and other vermin.

In recent years there has been some success in recycling of tires and reclaiming usable hydrocarbons from scrap tires by use of pyrolysis. By the process of pyrolysis some tires have been advantageously processed to recover fuel and other hydrocarbon compounds. This fuel may be extracted in the form of highly aromatic oils and/or a gas which has heating values ranging from eighty to two thousand BTU per cubic foot. A by-product to this pyrolysis process is an ash or char material that remains after completion of the process. In the past this ash or char material was generally considered not worth salvaging unless it could be somehow reused as a filler or a low grade carbon black by industry, or if used as a fuel supplement to coal.

The industry has attempted to use this char as a low grade carbon black. This use has been found generally disadvantageous since the consistency of the char has been known to contain a random distribution of particle size from extremely small particles to extremely large particles. These particles range in size from less than one micron to over one thousand microns in size. This particulate matter, in its rough char form, is mixed with fiber and steel impurities from the tire or rubber feedstock which must be removed for use in industry and also consists of gritty sand like particles which are undesirable for use as a filler.

Such reclaimed char material has not generally been accepted in the industry due to the existence of these impurities and because of actual problems encountered in the industry by the use of such by-products as fillers or coloring agents in manufactured products. Although attempts have been made to filter out steel, fiber and ash, that remain in the char, by mechanical separation processes, these processes have generally not been sufficient to obtain a suitable product. Additionally, it has not been possible to filter out or separate the larger grittier particles from the desired carbon black particles by the present methods.

Therefore, the pyrolysis processes of the past have not generally been accepted in the industry as producing a sufficient grade carbon black, since the smallest particle size which has been obtained has been approximately an eighteen mesh (1,000 microns) char or carbon black product. The use of this unrefined product in materials as a carbon black has also found disrepute because products produced from these types of particles have been found to be less structurally stable than those same products produced with commercially produced carbon blacks. Therefore, it has been extremely difficult for those producing this char to find markets for the char by-product as a coloring additive, or carbon black filler.

Attempts have been made in the past to reduce the char particle size such that a more commercially acceptable grade of carbon black could be obtained. A fluid energy mill process has been used to pulverize the char particles to produce a finer particle size by way of implosion of all particles in the char material. Such a process is shown in U.S. Patent No. 3,644,131 issued to Gotshall. These processes will produce in the one to ten micron range of char particles. However, the capital, expenditure and operating expenses for set up and operation, and the high amounts of energy cost required for use of such a process in production

2

make the resulting product too expensive for normal scaled production. This process requires the grinding of all of the char material whether it is a desired carbon black or the undesired gritty type particle since it relies on reduction of all of the particle sizes no matter what the form is of the material contained in the char. This results in the grinding of some of the unwanted gritty material along with reduction in size of the carbon black material. Therefore this process has not been commercially exploitable at the present prices of carbon black due to the production costs involved and the impurities contained in the final product. The only potentially commercial application in which such a process could be exploited is in large scale facilities, such as a facility which could process approximately one hundred tons of tires per day. Thus, while tests run on the products using the material produced by this process seemed to have improved rubber reinforcing characteristics over the former unrefined char product, the cost and energy effectiveness of the process is extremely prohibitive.

In other attempts for refining the char material, a roller grinding mill similar to the type used to grind coal particles into fine particles for combustion etc. have been used in reducing the char particles. However, with this method the particle size is limited to about a 325 mesh or 45 micron bulk product. These 325 mesh char ground products have been used in formulations and did show improved rubber reinforcing properties, however, this process again has not been found to be commercially practical due to the excessive costs and high amounts of energy consumed by such a process to produce the desirable product. Again the process used is a size reduction process wherein all of the char material particle size is reduced. This causes some unwanted materials to be contained in the final product.

Therefore it has been a goal in the art to produce such a fine grade of carbon black without the expensive cost of production which were necessary in the prior art methods. There have been several attempts to produce a carbon black material which is suitable for industrial use and may be used exactly as its commercial counter parts but at a lesser cost which would make such a product truly feasible to produce, but up to the present time these attempts have been generally unsuccessful.

It has been known by persons using the unprocessed char that elastomeric/rubber formulas that use the unrefined char compound have substantially different properties than were expected. These compounds using the char were found to be less structurally stable than those using conventional carbon black. While these results were noted by others in the art, the reason for such a phenomenon was not pursued. The present inventor then took it upon himself to find out the cause of this problem when a char material was used in an elastomer/rubber formulation. Through extensive research and analysis of the chemistry, structure, and physical properties of the compounded rubber and the char particles from various char samples, it was discovered that large portions of the char materials that remain from the pyrolysis of carbonaceous material are actually agglomerations or clusters of small and even submicron carbon black and filler particles. It was also found that the char material also contained hard gritty unitary particles which are undesirable in a usable carbon black material. It was found that the agglomerations or cluster particles contain the sought after carbon black particles and that the hard gritty unitary particulate material is undesirable in a carbon black material.

Thus, the present inventor discovered that these char particles which were previously thought of and accepted as hard gritty unitary particles, which made it necessary to expend large amounts of energy to grind or mill the unitary particles to a smaller size, where actually a mixture of the hard gritty unitary particles and the agglomerate or cluster particles of many small carbon black and filler particles originally used in the material when it was compounded. The inventor has discovered that it is necessary to expend only enough energy to de-agglomerate the agglomerate or cluster particles to produce a quality carbon black material and leave the unitary particles intact.

Therefore, in using this discovery in a commercial application the inventor has discovered a new useful process for reclaiming a usable carbon black particulate material from discarded rubber by selective de-agglomeration of these cluster or agglomerate particles and the separation of the carbon black from the remaining gritty unitary particles. This process is commercially practical and requires less energy to be expended, thus resulting in a commercially practical use of this char material.

US-A-4 647 443, upon which the prior art portion of claim 1 is based, shows a fairly typical prior art proposal as already discussed in which the char material is ground before being separated. This is, as discussed, expensive in energy consumption and also more difficult to separate to provide a high quality product where the required product is fine-grain carbon black. The present invention, as defined in claim 1, provides a better product, more economically by using a non-grinding agitation of the char material to obtain the fine grain carbon black.

Thus, the present invention reduces the amount of energy previously required in the reclaiming of carbon black from scrap material by the selective deagglomeration of agglomerated particles and allowing the remaining gritty unitary particles to remain intact, and not ground, for separation out of the final product.

It is an object of the present invention in the preferred form to provide a method for reclaiming carbon black from scrapped rubber materials which is directly usable in its reclaimed form and is commercially practicable.

Thus, the present invention selectively deagglomerates agglomerated or cluster particles by means of a physical agitation and without the expensive and energy-consuming process of grinding or milling of the entire char material.

Additional objectives, advantages and features of the present invention will become apparent from the following description in the appended claims taken in conjunction with the accompanying drawings.

Figures In The Drawings

Figure 1 is a graph showing particle size of the material after the pyrolysis process as opposed to the particle size after the de-agglomeration process of the present invention;

Figure 2 is a graph showing the range of particle size after classification of the present invention;

Figure 3 is a cross-sectional view of the modified air swept hammer mill as used in the de-agglomerization process of the present invention;

Figure 4 is a perspective view (partially broken away) showing a beater blade as used in the modified air swept hammer mill of the present invention.

Figure 5 is a flow chart drawing showing the method of the present invention;

Description Of The Preferred Embodiment

According to the present invention there is provided a method for reclaiming carbonaceous material from a waste material including the steps of first pyrolyzing the waste material to form a char material. The resultant char material comprises a mixture of agglomerated particles which are clusters or agglomerates of smaller particles and gritty unitary particles which are not easily broken down and are unwanted in the final product. Second, the agglomerated particles in this char material are then selectively de-agglomerated into fine particulate matter leaving the unitary particles unaffected. Third, the resultant de-agglomerated product is separated from the unitary particulate product.

Preferably the present process may be used to remove carbon black from scrap rubber such as tires and the like. However, other materials could be recovered and/or other materials used to recover carbon black using the process of the present invention.

The carbon material such as scrap tires in the present case is first pyrolyzed by conventional processes as are known to those skilled in the art. A pyrolysis process is generally a decomposition of the material by imposing large amounts of heat on the material in an oxygen free atmosphere and thus releasing the organic materials which were used to originally produce the rubber material in the first place which then can be recovered and reused. The resulting product used in the present invention is in the form of a char material which contains steel and other impurities which were contained in the tire rubber prior to the pyrolysis. These char materials are approximately one to one thousand microns in size and constitute agglomerates of smaller particles, most of which are carbon black, along with the gritty unitary particles. The carbon black is the desirable material which may be reclaimed and reused by the process of the present invention. The unitary particles are gritty or sand like particles which are unaffected by the agitation used in the present invention. While the agglomerated particles may be easily broken down into the component particles, the unitary particles would require actual grinding or milling in order to reduce the particle size. Therefore, the present invention requires only enough energy to de-agglomerate the agglomerates without attempting to reduce the particle size of these unitary particles, thus creating a substantial energy savings over the prior art methods which concentrated on reduction of particle size of the entire material, by the use of fluid mills or grinding.

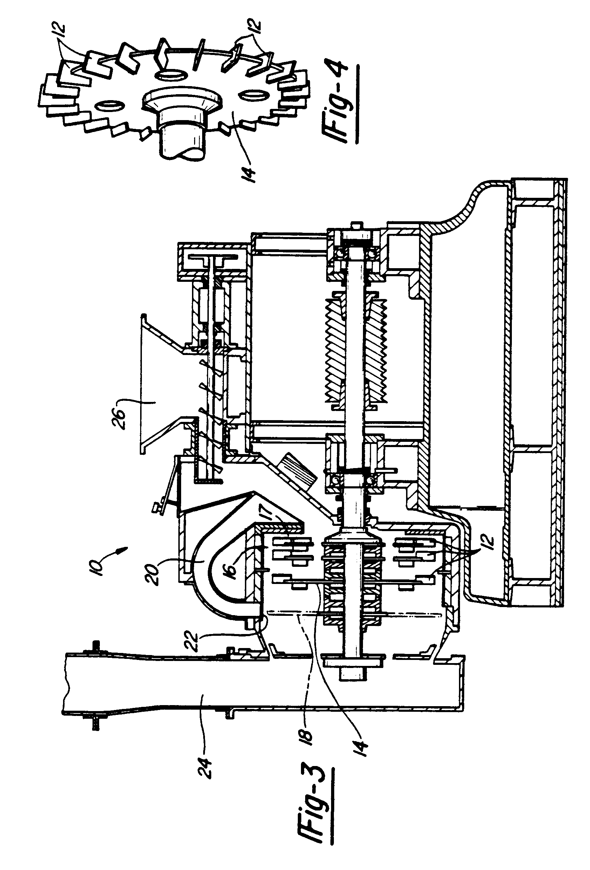

It is preferable that at this point the char material is separated from the impurities by such means as magnetic screens or by other separation methods as are known to those skilled in the art. As shown in Figure 4 an 18 mesh screen is used to filter the char material produced by the pyrolysis process.

The agglomerated particles in the char material are selectively de-agglomerated in a second step. This is accomplished by use of an apparatus that would agitate the particles and cause them to mechanically free themselves from their agglomerated state.

The apparatus used in the de-agglomeration process of the present invention is shown in Figure 4. This apparatus is a modified air swept hammer mill 10 which is conventionally used to grind and classify particulate matter. In the present application, however, the mill is not used in its grinding capabilities but is readjusted and modified to provide for only agitation which will liberate the carbon black particulate matter from the larger agglomerated particles and which will not act to grind or reduce the particle size of the unitary particles contained in the char. As shown in Figure 4 the beater blade 14 having perimeter beaters 12 which are usually used to grind particulate matter are readjusted for the maximum clearance at points 16, 17 and therefore provide little or no energy consuming grinding action. A representative beater blade 14 is shown in Figure 3a for purposes of illustration. The reclassifier blade (18 shown in phantom in Figure 3) is removed to provide maximum agitation of the char material and the tailings recycling housing 20 is closed off by door 22. Thus, by use of such a modified instrument the char material is introduced in the feeder 26 which introduces the material to the agitation mechanism. The agitation mechanism thereby physically agitates the char material to break down and physically separate the particulate carbon black material from its agglomerated condition. In operation the char material is inputted at the feeder 26 and agitated by the beaters 12. During the agitation the particulate matter is further swept through the discharge housing 24 and then collected at a collection or filter apparatus (not shown). The resultant material is then air classified for producing an extremely fine grade of carbon black material which is suitable for use as a commercial grade carbon black material and for separating the unaffected unitary particles.

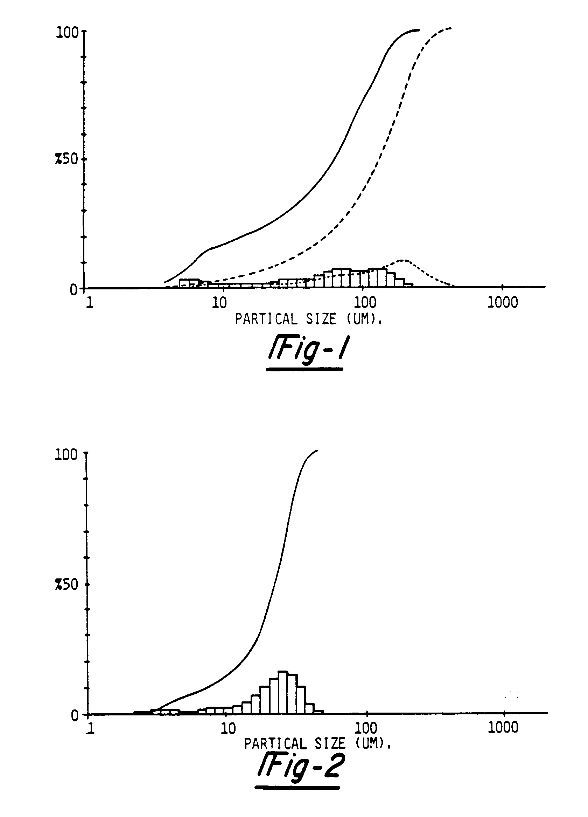

Figure 1 illustrates the particle size distribution between the screened char material after the pyrolysis and screening to 18 mesh (shown by dashed lines in the figure) and that of the material after the de-agglomeration process of the present invention. These samples were taken from representative runs of the present invention and analyzed using laser diffraction techniques. As is shown in Figure 1 the particle size distribution has been reduced dramatically from particle sizes ranging up to 1,000 microns prior to de-agglomeration to a distribution wherein 90% of the particles after de-agglomeration were less than 150 microns in size. The bar graphs shown at the base of Figure 1 show the distribution of particles size in the materials which also demonstrates a greater distribution of smaller particle after the de-agglomeration process of the present invention.

An air classifier apparatus is used at this point to separate the fine carbon black particles from the larger unitary particles which were substantially unaffected by the de-agglomeration process to form the final carbon black product which may then be collected. Thus, the final product is a commercially practicable carbon black product which may then be collected.

Shown in Figure 2 is a particle size distribution analysis of the product collected after the air classification step of the present invention showing a further reduction in final particle size from the de-agglomeration step. Analyzing this data reveals that the resultant product contains 90% of particle sizes less than 33.1 microns with a mean particle size of 22.2 microns.

Thus, through the air classification step the desired carbon black material which was selectively de-agglomerated in the prior step is separated from the unwanted unitary particles which were unaffected by the selective de-agglomeration process.

Therefore, in the present invention the inventor has deviated from the teachings in the prior art process, to pulverize the char to obtain fine carbon black particles, to the present process wherein the char is physically agitated to release the fine particles from the agglomerate char particles, and leave the unitary particles unaffected.

Thus, in the present invention the modified air swept mill operates as a large series of impeller blades which cause physical agitation of the agglomerate particles. It is believed that this agitation will cause the agglomerated particles in the char material, which are agglomerates or clusters of smaller individual particles to break apart into the smaller individual particles which comprise them. Thus, while the air swept mill apparatus with the modification as disclosed above, is disclosed as one mechanism of de-agglomerating these particles, other machines could advantageously be used which provides an agitation of the material which will cause the individual particles contained in the char to break away from the agglomerate particles such as by the agitation disclosed above.

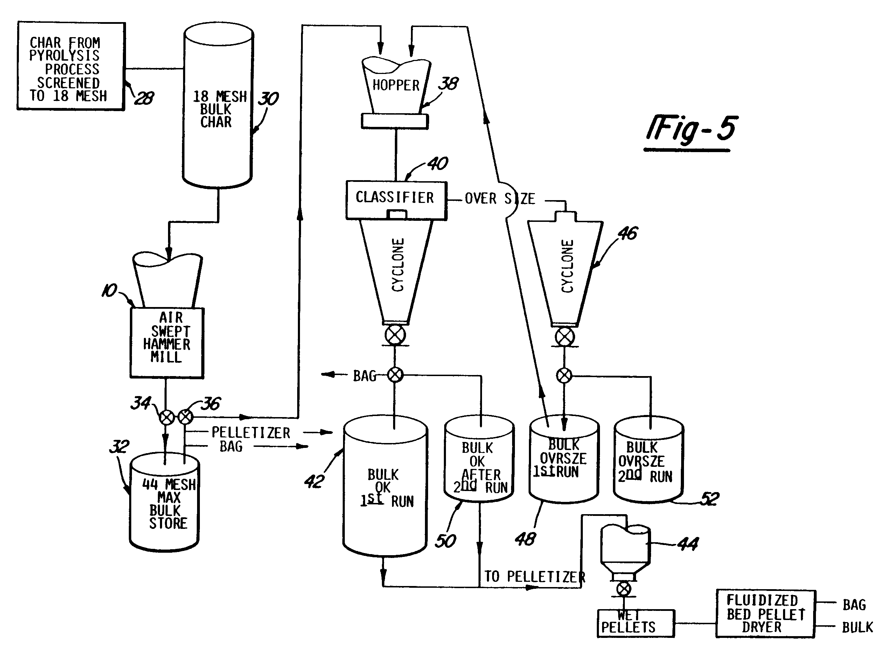

Referring now to Figure 5 a flow chart is provided showing the entire process sequence of the present invention. As shown therein, the char 28 from the pyrolysis of scrap rubber, screened to 18 mesh, is transferred to container 30 and shipped to the reclaiming apparatus. The bulk char material is then input into the air swept hammer mill 10 and is selectively de-agglomerated as disclosed above. The resultant material may be either stored in container 32 through valve 34 and pelletized or bagged for use as a low grade carbon black or can be routed through valves 34, 36 to the air classifier for further refinement. Generally, the de-agglomerated char is then routed to hopper 38 and into the air classifier 40. Air classifier 40 then classifies the material and removes material in particle sizes from about 1 to about 100 microns. This material is then collected through the cyclone unit 41 in container 42 which is pelletized in pelletizer 44 which pellets are then dried and bagged or packaged in bulk or this material is directly bagged as the final product.

The oversize material from the air classifier 40 is then routed to a second cyclone 46 into container 48. This oversized material is then routed to the air classifier 40 to remove any remaining usable carbon black material which was not removed during the first run. The recovered product from the second run is then routed to container 50 and is processed as final product into pellet or bagged form. The oversized material from this run is then routed through cyclone 46 and into container 52 which material consists of essentially the unwanted unitary particles contained in the char material. This is then discarded as waste.

Examples

The invention will be more fully understood by reference to the following examples which are to be considered as merely illustrative thereof.

Example 1

Scrap tires are pyrolyzed using a destructive distillation type process. The resultant char material designated as NU-TECH char material is obtained in drums.

An air swept pulverizer is modified by removing the reclassifier plate, and adjusting the machine clearances for minimum grinding to keep any possible grinding or pulverizing action to a minimum. In the present case a 1/8" tip clearance (16) was used and a 1/8" back clearance 17 was used.

The char material is then placed in the modified air swept pulverizer 10. The machine is allowed to operate at maximum revolutions per minute with the char material being fed in as fast as possible. The char particles are agitated in the mechanism for de-agglomeration of the char particles into individual particles. The resultant product is a carbon black and is air swept out of the unit and removed at a product filter collector (not shown). This product is then air classified to remove impurities and larger unitary particles to obtain a representative sample for final use.

For the purposes of the present example, the following parameters were used. A Schwartz-O'Neil Model 16, Air Swept Pulveriser was used for the present example with the following parameters. The air swept mill is adjusted to approximately a 3.2 mm (1/8") tip clearance and a 3.2 mm (1/8") back clearance. The machine was run at 4690 rpm using 15 kilowatt (20 HP) engine with an air velocity of 14.3 m$^3$ (545 ft$^3$)-/minute and the char material was inputted at a rate of 454 kg (1000 lbs)/hr.

Several runs using the air classifier were accomplished and the resultant products were designated ATR077, Pyroblack 5F, Pyroblack 7F, Pyroblack 5AF and Pyroblack 3S. A Micro-Sizer MS-20 Air Classifier system was used which is produced by Amvest Progressive Industries Inc. The parameters for these runs are listed in Table I.

TABLE I

| Air Classifier Parameters | | | | | |
|---|---|---|---|---|---|
| | AT077 | 5F | 7F** | 5AF | 3S* |
| Fan Speed (RPM) | 4600 | 4600 | 4600 | 4600 | - |
| Run Time (min:sec) | 8:00 | 8:00 | 9:00 | 48:25 | - |
| Feed Rate (kg(lb)/hr) | 323(712) | 323(712) | 366(807) | 217(478) | - |
| Rotor Speed (RPM) | 2600 | 2600 | 1600 | 2600 | - |
| Total Feed Weight (kg(lb)) | 43(95) | 43(95) | 55(121) | 175(386) | - |

* 3S is raw product from modified air swept mill (not air classified).
** Left over course product from the 5F run is used for further classification here.

The ATR077 sample was found to have reinforcement properties similar to an N-770 series commercially produced carbon black. The particle size of ATR077 was analysed using Malvern laser beam diffraction equipment. This indicated a 5-100 micron range particle size with an average particle size of 40-50 microns. The reinforcement of the ATR077 of the present invention was found to be equivalent to commercial carbon blacks with particle sizes of 0.05 to 0.1 microns. It is believed that the ATR077 carbon black of the present invention would be suitable for use as a semi-reinforcing filler in tyres, hoses, belts, moulded goods and extruded goods. ATR077 was pelletised and analysed. The analysis of the properties of this material are summarised in Table II.

TABLE II

| Typical Properties of ATR077 | |
|---|---|
| Form | Black Pellet |
| Specific Gravity | 1.83 |
| Bulk Density | 497 kg/m$^3$ (31 lb/ft$^3$) |
| pH | 7.8 |
| Ash | 13% |
| Volatiles | 0.25% |
| Carbon Content | 81.0% |
| Total Sulphur (non-reactive) | 2.8% |
| Particle Size, measured | 40 - 50 micron |
| Particle Size, effective | 0.05 - 0.1 micron |

EXAMPLE II

A natural rubber compound using the ATR077 carbon black from Example 1 is prepared using the recipe prescribed in ASTMD3192 for testing of the carbon black of the present invention. Two control compounds were also prepared using MT N-990 carbon black and IRB #6 carbon black. The resulting compounds are tested, the test results are summarised in Table III.

## TABLE III

## Natural Rubber

| Loading | ATR077 50phr | N-990 50 phr | IRB#6 50 phr |
|---|---|---|---|
| Rheometer at 145°C (293°F) | | | |
| Max Torque kg.m (lbf.in) | 0.86(74.8) | 0.80(69.5) | 1.02(88.7) |
| Min Torque kg.m (lbf.in) | 0.24(74.8) | 0.18(15.4) | 0.28(24.1) |
| Cure Time 90% min | 25.0 | 25.75 | 29.75 |
| Scorch Time ts2, min | 10.0 | 9.50 | 10.25 |
| Physical Properties 4.57m/145°C (15'/293°F) | | | |
| Tensile bar(psi) | 41.5(3600) | 40.1(3840) | 46.0(3990) |
| 300% Modulus bar(psi) | 15.2(1320) | 8.4(730) | 21.6(1870) |
| Elongation % | 560 | 660 | 550 |
| Hardness | 57 | 50 | 65 |
| 9.14m/145°C (30'/293°F) | | | |
| Tensile bar(psi) | 38.4(3330) | 37.5(3250) | 45.5(3950) |
| 300% Modulus bar(psi) | 15.2(1320) | 8.4(730) | 21.6(1870) |
| Elongation % | 510 | 610 | 510 |
| Hardness | 60 | 52 | 69 |

The results indicate that a natural rubber material using the ATR077 carbon black of the present invention results in a natural rubber compound which is superior to the compound using a commercial grade MT N-990 carbon black and has similar properties to a compound using a N-770 grade carbon black and has similar properties to a compound using an N-770 grade carbon black. Thus, the use of the ATR077 compound in a natural rubber provides characteristics denoting that such a carbon black is between the N-990 grade and the IRB#6 grade when used in a natural rubber compound.

EXAMPLE III

A synthetic butyl rubber compound containing the ATR077 product was prepared and a second SBR control compound using the N-990 carbon black was prepared using a recipe containing the following consistencies: SBR 1502-100; Zn0-3.0; Stearic Acid 1.0; Sulphur 1.75; Santocure NS-1.0; STR077 or N-990 carbon black 50.0. These compounds were tested and the results are tabulated in Table IV.

## TABLE IV

### Natural Rubber

| Loading | ATR077 50phr | N-990 50 phr |
|---|---|---|
| Rheometer at 160°C (320°F) | | |
| Max Torque kg.m (lbf.in) | 0.99(85.9) | 0.85(74.0) |
| Min Torque kg.m (lbf.in) | 0.17(14.5) | 0.113(9.8) |
| Cure Time 90% min | 17.8 | 19.3 |
| Scorch Time ts2, min | 6.4 | 8.5 |
| Physical Properties | | |
| Tensile bar(psi) | 1.55(2250) | 97.8(1420) |
| 300% Modulus bar(psi) | 107(1560) | 45.5(660) |
| Elongation % | 440 | 580 |
| Hardness | 64 | 55 |
| Tear,C,ppi | 201 | 151 |
| Comp.Set,MthB | 19.0 | 19.3 |

Thus, the ATR077 product appears to be equal to or superior to the N-990 carbon black when used in a synthetic butyl rubber formulation.

EXAMPLE IV

Natural rubber formulations were prepared using the remaining pyroblack formulations prepared in Example 1 and using the MT N-990 carbon black material in a control formulation. These formulations were prepared with the constituents as shown in Table V.

8

Table V

| Natural Rubber Formulations | | | | | |
|---|---|---|---|---|---|
| | MT N-990 CONTROL | PYROBLACKS | | | |
| | | 5F | 7F | 5AF | 3S |
| RSS#1 Natural Rubber | 100.0 | 100.0 | 100.0 | 100.0 | 100.0 |
| Zinc Oxide | 5.0 | 5.0 | 5.0 | 5.0 | 5.0 |
| Stearic Acid | 2.0 | 2.0 | 2.0 | 2.0 | 2.0 |
| Sulfur | 2.25 | 2.25 | 2.25 | 2.25 | - |
| Santocure NS | 1.2 | 1.2 | 1.2 | 1.2 | 1.2 |
| MT N-990 | 50.0 | - | - | - | - |
| Pyroblack 5 | - | 50.0 | - | - | - |
| Pyroblack 7F | - | - | 50.0 | - | - |
| Pyroblack 5AF | - | - | - | 50.0 | - |
| Pyroblack 3S | - | - | - | - | 50.0 |
| TOTALS | 160.45 | 160.45 | 160.45 | 160.45 | |

These compounds were then tested using the methods summarized in Table VI.

TABLE VI

| TEST METHODS | |
|---|---|
| Rheometer | ASTM D 2084 143°C (290°F), 30 min clock 100 cpm, 3 arc, 100 range |
| Elongation, | ASTM D 412 |
| Tensile Strength Modulus | Die C dumbbells tested at 50.8 cm/min (20 in/min) |
| Durometer | ASTM D 2240 Instantanaeous Shore A |
| Tear Resistance | ASTM D 624, Die C |
| Specific Gravity | ASTM D 297, Hydrostatic Method |
| Bashore Rebound | ASTM D 2632 Tested at 23.9°C (75°F) |
| Compression Set | ASTM D 395, Method B 22 hrs at 70°C (158°F), 25% deflection, $\frac{1}{2}$ hr recovery |
| Dispersion Rating | Microscopic examination at 30X (0-10 rating, 10 = best) |

The results of these tests are summarised in Table VII.

## TABLE VII

| Rheometer Data | MT N-990 Control | 5F | Pyroblacks 7F | 5AF | 3S |
|---|---|---|---|---|---|
| Minimum Torque kg.m | 0.150 | 0.191 | 0.224 | 0.192 | 0.194 |
| (lbf.in) | 13.0 | 16.6 | 19.4 | 16.7 | 16.8 |
| Maximum Torque kg.m | 0.970 | 1.110 | 1.111 | 1.09 | 1.096 |
| (lbf.in) | 84.2 | 96.3 | 96.4 | 94.2 | 95.1 |
| Optimum Cure Time | 18.4 | 16.5 | 15.8 | 17.3 | 16.8 |
| Scorch Time, TS2, min | 10.4 | 7.1 | 8.4 | 7.5 | 8.3 |

### Original Physical Properties

| | | | | | |
|---|---|---|---|---|---|
| Ultimate Elongation,% | 530 | 420 | 340 | 420 | 370 |
| 100% Modulus, bar | 22 | 42 | 39 | 42 | 42 |
| (psi) | 320 | 610 | 560 | 610 | 610 |
| 200% Modulus, bar | 51 | 94 | 72 | 92 | 81 |
| (psi) | 740 | 1360 | 1050 | 1330 | 1180 |
| 300% Modulus, bar | 96 | 153 | 102 | 154 | 125 |
| (psi) | 1390 | 2220 | 1480 | 2230 | 1810 |
| 400% Modulus, bar | 232 | 237 | – | 218 | – |
| (psi) | 3360 | 3440 | – | 3170 | – |
| Tensile Strength, bar | 232 | 237 | 116 | 234 | 159 |
| (psi) | 3360 | 3440 | 1690 | 3390 | 2310 |
| Shore A Durometer, pts | 60 | 67 | 67 | 68 | 68 |

### Tear Resistance

| | | | | | |
|---|---|---|---|---|---|
| Tear Strength, ppi | 246 | 269 | 188 | 263 | 234 |

### Specific Gravity

| | | | | | |
|---|---|---|---|---|---|
| Specific Gravity | 1.13 | 1.14 | 1.15 | 1.14 | 1.14 |

### Bashore Rebound

| | | | | | |
|---|---|---|---|---|---|
| Resilience, % | 66.0 | 61.0 | 65.5 | 59.0 | 63.0 |

### Compression Set

| | | | | | |
|---|---|---|---|---|---|
| Compression Set, % | 23.1 | 22.7 | 16.7 | 22.5 | 22.2 |

### Dispersion Rating

| | | | | | |
|---|---|---|---|---|---|
| Rating | 10 | 10 | 10 | 10 | 10 |

From these results it is summarized that the pyroblack 5F and 5AF is approximately better than the equivalent compound using the MT N-990 carbon black and is approximately equal to an N-770 grade carbon black and is approximately equal to an N-770 grade carbon black. Therefore, it is believed that these compounds would be suitable for use in compounds which have formerly used the N-990 commercial grade of carbon black. Additionally, it appears from these tests that the Pyroblack 7F would be equivalent to N-990 for use in the natural rubber compounds.

Example IV

Representative synthetic butyl rubber formulations were prepared as shown in Table VIII.

Table VIII

| SBR FORMULATIONS | | PYROBLACKS | | | |
|---|---|---|---|---|---|
| | MT N-990 CONTROL | 5F | 7F | 5AF | 3S |
| SBR 1502 Rubber | 100.0 | 100.0 | 100.0 | 100.0 | 100.0 |
| Zinc Oxide | 3.0 | 3.0 | 3.0 | 3.0 | 3.0 |
| Stearic Acid | 1.0 | 1.0 | 1.0 | 1.0 | 1.0 |
| Sulfur | 1.75 | 1.75 | 1.75 | 1.75 | 1.75 |
| Santocure NS | 1.0 | 1.0 | 1.0 | 1.0 | 1.0 |
| MT N-990 | 50.0 | - | - | - | - |
| Pyroblack 5F | - | 50.0 | - | - | - |
| Pyroblack 7F | - | - | 50.0 | - | - |
| Pyroblack 5AF | - | - | - | 50.0 | - |
| Pyroblack 3S | - | - | - | - | 50.0 |

The compounds were tested using the procedures and methods of Table V. The test results are summarized in Table IX.

TABLE IX

| Rheometer Data | MT N-990 Control | Pyroblacks | | | |
|---|---|---|---|---|---|
| | | 5F | 7F | 5AF | 3S |
| Minimum Torque kg.m | 0.113 | 0.174 | 0.210 | 0.171 | 0.186 |
| (lbf.in) | 9.8 | 15.1 | 18.2 | 14.8 | 16.1 |
| Maximum Torque kg.m | 0.853 | 1.017 | 1.065 | 0.990 | – |
| (lbf.in) | 74.0 | 88.2 | 92.4 | 85.9 | – |
| Optimum Cure Time | 19.3 | 17.9 | 19.5 | 17.8 | 18.9 |
| Scorch Time, TS2, min | 8.5 | 6.5 | 8.8 | 6.4 | 6.3 |

Original Physical Properties

| | | | | | |
|---|---|---|---|---|---|
| Ultimate Elongation,% | 580 | 470 | 330 | 440 | 400 |
| 100% Modulus, bar | 14 | 24 | 31 | 30 | 25 |
| (psi) | 200 | 350 | 450 | 430 | 370 |
| 200% Modulus, bar | 27 | 57 | 56 | 66 | 55 |
| (psi) | 390 | 830 | 810 | 960 | 800 |
| 300% Modulus, bar | 45 | 97 | 72 | 107 | 80 |
| (psi) | 660 | 1410 | 1040 | 1560 | 1160 |
| 400% Modulus, bar | 63 | 136 | – | 148 | 107 |
| (psi) | 920 | 1970 | – | 2150 | 1550 |
| Tensile Strength, bar | 97 | 167 | 76 | 155 | 107 |
| (psi) | 1420 | 2430 | 1100 | 2250 | 1550 |
| Shore A Durometer, pts | 55 | 63 | 65 | 66 | 63 |

Tear Resistance

| | | | | | |
|---|---|---|---|---|---|
| Tear Strength, ppi | 151 | 188 | 169 | 201 | 184 |

Specific Gravity

| | | | | | |
|---|---|---|---|---|---|
| Specific Gravity | 1.15 | 1.15 | 1.15 | 1.16 | 1.15 |

Bashore Rebound

| | | | | | |
|---|---|---|---|---|---|
| Resilience, % | 52.0 | 48.5 | 50.0 | 48.0 | 50.0 |

Compression Set

| | | | | | |
|---|---|---|---|---|---|
| Compression Set, % | 19.3 | 18.7 | 17.0 | 19.0 | 18.5 |

Dispersion Rating

| | | | | | |
|---|---|---|---|---|---|
| Rating | 10 | 10 | 10 | 10 | 10 |

Thus, it can be surmised from the above data that the pyroblack samples of the present invention can be readily used in natural and SBR compounds in the place of commercial carbon blacks.

Because of his discovery that these char particles are actually agglomerates of smaller carbon black particles and other unwanted unitary particles, the inventor is able to obtain a purified carbon black product from char by agitation of these char particles which physically separates the finer particles from the agglomerate particles without reducing the particle size of the unitary particles. This process requires substantially less energy than milling or grinding char particles to a smaller size. Thus, in the present invention it is believed that the agglomerated particles are selectively de-agglomerated by the agitation provided by the mill, by contacting moving parts of the mill and impact between the particles themselves rather than grinding of the particles between two grinding surfaces under pressure or by the fluid milling as was taught in the prior art. Therefore, in the present process a superior grade carbon black material can be reclaimed from rubber or elastomer compounds at a price which is competitive and profitable when compared with carbon blacks produced by conventional processes.

While the present invention has been disclosed as a method for reclaiming carbon black it will be recognized by those skilled in the art that the method and discovery of the present invention will be useful in reclaiming other useable materials from a waste material other than as disclosed above. Therefore the present invention should be limited only as by the scope of the appended claims.

## Claims

1. A method of reclaiming carbonaceous materials from waste comprising the steps of: pyrolyzing a waste material to form a char material, said char material containing agglomerated particles and unitary particles; mechanically treating the char material to form a product comprising small particles of the carbonaceous material and separating the fine carbonaceous material particles from the product, characterised in that said mechanical treatment comprises agitating said char material without grinding selectively to deagglomerate said agglomerated particles in said char material into deagglomerated component particles.

2. A method according to claim 1, wherein said agitation of said char particles is accomplished by using an impeller means for agitation of the material.

3. A method according to claim 2, wherein said impeller means further comprises an air swept mill.

4. A method according to any preceding claim, wherein said agitating is accomplished by way of an impeller in an enclosed housing, said impeller being rotatable in said housing, and said impeller causing said agitation of char material placed in said housing for deagglomeration of said agglomerated particles in said char material into individual particles.

5. A method according to any preceding claim, wherein said separation step is accomplished by an air classifier mechanism.

6. A method according to any preceding claim, wherein the waste comprises scrap rubber.

7. A method according to any preceding claim, wherein carbon black particles having a particle size of less than 100 microns are separated and collected.

8. A method according to claim 7, wherein the carbon black particles obtained range in size from about 1 micron to about 100 microns.

9. A method according to any preceding claim, wherein the product after said mechanical agitation step is subject to air classifying to separate it into the carbon black particles and a bulk oversize material.

10. A method according to claim 9, further comprising the steps of: collecting said carbon black particles and said bulk oversize material in separate containers; and repeating said air classifying step on said bulk oversized material.

11. A method according to any preceding claim, wherein prior to mechanically agitating the pyrolyzed char material is subject to a screen separation step to separate metal and impurities from the char material.

## Patentansprüche

1. Verfahren zur Wiedergewinnung kohlenstoffhaltigen Materials aus Abfall mit folgenden Schritten: Pyrolisieren von Abfallmaterial, um ein verkohltes Material zu schaffen, wobei das verkohlte Material agglomarierte Partikel und eine Einheit bildende Partikel enthält, mechanisches Behandeln des verkohlten Materials, um ein Produkt zu schaffen, das kleine Partikel von kohlenstoffhaltigem Material umfaßt und Trennen der feinen Partikel aus kohlenstoffhaltigem Material von dem Produkt, dadurch gekenn-

EP 0 303 447 B1

zeichnet, daß die mechanische Behandlung daraus besteht, daß das verkohlte Material ohne speziellen Mahlschritt gerührt wird, um die agglomerierten Partikel in dem verkohlten Material zu desagglomerierten Partikelkomponenten zu desagglomerieren.

**2.** Verfahren nach Anspruch 1, in welchem das Rühren der verkohlten Partikel unter Verwendung eines Rührorgangs zum Rühren des Materials durchgeführt wird.

**3.** Verfahren nach Anspruch 2, in welchem das Rührorgan zusätzlich eine Luftdurchlaufmühle umfaßt.

**4.** Verfahren nach einem der vorangehenden Ansprüche, in welchem das Rühren durch ein Rührorgan in einem Gehäuse erfolgt, wobei das Rührorgan in dem Gehäuse drehbar angetrieben ist und wobei das Rührorgan das Rühren des verkohlten Materials, das in das Gehäuse eingeführt ist bewirkt, um die agglomerierten Partikel in dem verkohlten Material in Einzelpartikel zu desagglomerieren.

**5.** Verfahren nach einem der vorangehenden Ansprüche, in welchem der Trennschritt durch einen Luftklassierungsmechanismus durchgeführt wird.

**6.** Verfahren nach einem der vorangehenden Ansprüche, in welchem der eingesetzte Abfall Abfallgummi umfaßt.

**7.** Verfahren nach einem der vorangehenden Ansprüche, in welchem die schwarzen Kohlenstoffpartikel, die eine Partikelgröße von kleiner als 100 $\mu$m aufweisen, abgetrennt und gesammelt werden.

**8.** Verfahren nach Anspruch 7, in welchem die erzeugten schwarzen Kohlenstoffpartikel eine Größe von 1 $\mu$m bis ungefähr 100 $\mu$m aufweisen.

**9.** Verfahren nach einem der vorangehenden Ansprüche, in welchem das Produkt nach dem mechanischen Rührschritt einer Luftklassierung unterworfen wird, um es in die schwarzen Kohlenstoffpartikel und eine Masse aus größerem Material zu trennen.

**10.** Verfahren nach Anspruch 9, das folgende weitere Schritte umfaßt: Sammeln der schwarzen Kohlenstoffpartikel und der Masse des größeren Materials in getrennten Behältern und Wiederholen des Luftklassierunggschrittes mit der Masse des vergleichsweise größeren Materials.

**11.** Verfahren nach einem der vorangehenden Ansprüche, in welchem das pyrolisierte verkohlte Material vor dem mechanischen Rühren einem Siebtrennungsschritt unterworfen wird, um Metall und andere Unreinheiten von dem verkohlten Material zu trennen.

**Revendications**

**1.** Procédé de régénération de matériaux carbonés provenant de décharges, comprenant les étapes consistant à :
- pyrolyser le matériau de décharge pour former un matériau carbonisé, ledit matériau carbonisé contenant des particules agglomérées et des particules simples,
- faire subir un traitement mécanique au matériau carbonisé pour former un produit contenant de petites particules de matériau carboné, et
- séparer du produit les fines particules de matériau carboné, caractérisé en ce que ledit traitement mécanique comprend le fait d'agiter ledit matériau carbonisé sans le moudre, de façon sélective, pour désagréger lesdites particules agglomérées dans ledit matériau carbonisé en des particules désagglomérées de composants.

**2.** Procédé selon la revendication 1, dans lequel ladite agitation desdites particules carbonisées est effectuée grâce à l'utilisation d'un moyen formant palette d'agitation du matériau.

**3.** Procédé selon la revendication 2, dans lequel ledit moyen formant palette d'agitation comprend un malaxeur à courant d'air.

14

**4.** Procédé selon l'une quelconque des précédentes revendications, dans lequel ladite agitation est effectuée grâce à une palette placée dans un boîtier fermé, ladite palette pouvant tourner dans ledit boîtier et ladite palette provoquant ladite agitation dudit matériau carbonisé placé dans ledit boîtier afin de désagréger lesdites particules agglomérées dans ledit matériau carbonisé en particules individuelles.

**5.** Procédé selon l'une quelconque des précédentes revendications, dans lequel ladite étape de séparation est effectuée avec un mécanisme de triage par air.

**6.** Procédé selon l'une quelconque des précédentes revendications, dans lequel le matériau de décharge contient des déchets de caoutchouc.

**7.** Procédé selon l'une quelconque des précédentes revendications, dans lequel des particules de noir de carbone, ayant une granulométrie inférieure à 100 microns, sont séparées et recueillies.

**8.** Procédé selon la revendication 7, dans lequel les particules de noir de carbone obtenues ont une taille comprise entre environ 1 $\mu$ et environ 100 $\mu$.

**9.** Procédé selon l'une quelconque des précédentes revendications, dans lequel le produit, après ladite étape d'agitation mécanique, est soumis à un triage par air pour le séparer en des particules de noir de carbone et du matériau en vrac, de plus grande taille.

**10.** Procédé selon la revendication 9, comprenant en outre les étapes consistant à :
- recueillir lesdites particules de noir de carbone et ledit matériau en vrac de plus grande taille dans des récipients séparés, et
- répéter ladite étape de triage par air sur ledit matériau en vrac de plus grande taille.

**11.** Procédé selon l'une quelconque des précédentes revendications, dans lequel, avant ladite agitation mécanique, le matériau pyrolysé carbonisé est soumis à une étape de séparation par tamisage pour séparer métaux et impuretés du matériau carbonisé.

EP 0 303 447 B1

*Fig-1*

*Fig-2*

16

Fig-4

Fig-3

_Fig-5_